(19) Europäisches Patentamt
European Patent Office
Office européen des brevets

(11) **EP 2 055 540 B1**

(12) **FASCICULE DE BREVET EUROPEEN**

(45) Date de publication et mention
de la délivrance du brevet:
**14.07.2010 Bulletin 2010/28**

(51) Int Cl.:
***B60S 1/34*** *(2006.01)*

(21) Numéro de dépôt: **08166189.4**

(22) Date de dépôt: **09.10.2008**

(54) **Dispositif d'essuyage pour surface vitrée de véhicule automobile**

Vorrichtung zum Reinigen von Glasflächen eines Kraftfahrzeugs

Wiping device for the glazed surface of an automobile

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.10.2007 FR 0707617**

(43) Date de publication de la demande:
**06.05.2009 Bulletin 2009/19**

(73) Titulaire: **VALEO SYSTEMES D'ESSUYAGE**
**78321 La Verrière (FR)**

(72) Inventeur: **Cerdan, Jérôme**
**63570, Beaulieu (FR)**

(74) Mandataire: **Rosolen-Delarue, Katell**
**Valeo Systèmes d'Essuyage**
**Propriété Industrielle**
**Z.A. de l´Agiot**
**8 Rue Louis Lormand**
**78321 La Verrière (FR)**

(56) Documents cités:
**WO-A-2005/063533     FR-A- 2 754 506**
**GB-A- 2 149 651        US-A1- 2003 233 724**

**Description**

La présente invention se rapporte à un dispositif d'essuyage d'une surface vitrée de véhicule automobile, adapté notamment pour les pare-brise de surfaces complexes.

Les dispositifs d'essuyage d'un pare-brise de véhicule automobile sont conçus pour que la lame de caoutchouc du balai d'essuie-glace soit maintenue en contact, sur toute sa longueur, contre la surface vitrée du pare-brise afin d'assurer un essuyage efficace de ce dernier.

Cependant, compte-tenu du galbe souvent important donné aux surfaces de pare-brise, le balai est susceptible d'occuper des positions angulaires dans lesquelles il n'est plus plaqué contre la surface vitrée avec une pression suffisante pour assurer un essuyage efficace de la surface vitrée du pare-brise.

Diverses solutions permettant d'obtenir une force d'appui suffisante du bras sur le balai au niveau de la liaison bras-balai, quelle que soit la position angulaire de la tête d'entraînement, ont déjà été proposées.

On connaît notamment des dispositifs d'essuyage dans lesquels le bras porte-balai est positionné au moins partiellement à l'intérieur d'un carter dont une extrémité est reliée à une tête d'entraînement, l'extrémité du bras porte balai opposée à celle portant effectivement le balai étant en outre reliée à la tête d'entraînement par l'intermédiaire d'un ressort hélicoïdal de rappel s'étendant longitudinalement dans le carter. L'ensemble carter-bras-balai est ainsi solidaire à rotation de la tête d'entraînement, et le ressort de rappel, agissant en traction, exerce sur le bras un effort destiné à ramener le bras d'essuie-glace vers la position basse d'appui du balai contre la surface à essuyer. Dans ces solutions connues, l'ensemble carter-bras est en outre monté sur la tête d'entraînement de manière à pouvoir pivoter autour d'un axe sensiblement perpendiculaire à l'axe de balayage, vers une position dite de débrayage facilitant notamment le remplacement du balai. Le même ressort de rappel agit dans ce cas sur le bras de manière à l'amener en appui contre des moyens de butée qui définissent cette position de débrayage. L'inconvénient majeur de cette solution réside dans l'utilisation même du ressort hélicoïdal, dont le montage au moment de la fabrication du dispositif d'essuyage est difficilement automatisable. En outre, le carter doit être conçu pour masquer au mieux ce ressort, au moins depuis l'extérieur du véhicule. Cette contrainte ne permet pas de donner au dispositif d'essuyage des formes esthétiques telles que des formes effilées et les plus plates possibles. Le ressort reste par ailleurs visible pour le conducteur et les passagers lorsque le dispositif d'essuyage est en fonctionnement. Enfin, il est difficile de garantir que la force d'appui du bras sur le balai au point de contact reste sensiblement constante quelle que soit la position angulaire de la tête d'entraînement autour de son axe d'entraînement.

Une autre solution connue, décrite notamment dans le document FR 2 890 922 au nom de la Demanderesse, propose un dispositif d'essuyage dont l'extrémité arrière du bras porte-balai est monté sur une tête d'entraînement, solidaire à rotation de cette tête d'entraînement autour de son axe correspondant à l'axe de balayage alterné, le dispositif comportant en outre une came coopérant avec le bras de façon à provoquer le déplacement de l'extrémité avant du bras d'essuyage, par pivotement du tronçon d'extrémité arrière du bras par rapport à la tête d'entraînement, en fonction de la position angulaire du bras d'essuyage autour de l'axe d'entraînement, afin de faire varier la pression d'essuyage du balai d'essuie-glace.

Toutefois, cette solution requiert un certain nombre de pièces dont l'assemblage reste complexe à mettre en oeuvre.

De plus, le profil de came doit être adapté selon la forme (ou galbe) de la surface vitrée du véhicule automobile auquel le dispositif d'essuyage est destiné, pour assurer un essuyage efficace de ladite surface vitrée, ce qui ne permet pas d'offrir un système standard pour tout type de véhicule.

Enfin, ces dispositifs à came engendrent des frottements générant du bruit ainsi que leur usure rapide.

On connaît enfin du document WO 2006/018453 un dispositif d'essuyage dans lequel le balai d'essuie-glace, ou bien des bandes longitudinales présentes sur ce balai, comporte un matériau hyper élastique permettant de préformer le balai selon une courbure spécifique lui permettant, lorsqu'il est en contact avec le pare-brise, de répartir l'effort d'appui central du bras sur le balai au niveau de la liaison bras-balai sur toute la longueur du balai, de façon à obtenir une pression constante mesurée sur toute la longueur du balai. Dans ce dispositif, l'utilisation d'un ressort entre la tête d'entraînement et le bras porte-balai reste cependant nécessaire pour garantir que ce bras, et par suite le balai qu'il porte, sera bien plaqué contre le pare-brise.

La présente invention a pour but de pallier les inconvénients de la solution de l'art antérieur en offrant notamment un dispositif d'essuyage de faible encombrement, permettant au bras de générer en fonctionnement une force d'appui sensiblement constante sur toute la zone de balayage, de fabrication facilitée, et aisément adaptable à tout type de forme de pare-brise pour véhicule automobile.

Ainsi, la présente invention a pour objet un dispositif d'essuyage pour surface vitrée de véhicule automobile, comportant une tête d'entraînement apte à être entraînée en rotation alternée autour d'un axe de balayage, un bras d'essuyage solidaire à rotation de la tête d'entraînement, ledit bras d'essuyage comprenant une première extrémité portant un balai d'essuyage, et une deuxième extrémité, opposée à la première extrémité, et reliée à ladite tête d'entraînement par l'intermédiaire de moyens élastiques de rappel aptes à générer une force de rappel permettant au bras d'exercer, sur le balai d'essuyage, par exemple au point de liaison avec le balai, une force d'appui suffisante en direction de la surface vitrée quelle que soit la position angulaire de la tête d'entraînement autour de l'axe de balayage, **caractérisé en ce que** lesdits moyens élastiques de rappel comportent une poutre précontrainte en matériau hyper élastique s'étendant dans le prolongement dudit bras, ladite poutre étant apte à subir, entre deux positions extrémales du dispositif d'essuyage lors d'un balayage, des déformations entre deux valeurs limites tout en générant une force de rappel sensiblement constante.

La poutre est de préférence dimensionnée et précontrainte de façon à subir, lors du balayage, des déformations comprises entre 0,1 % et 0,5%.

Avantageusement, la poutre est de forme parallélépipédique, chaque extrémité de la poutre étant insérée pour maintien dans une fente correspondante respectivement de la tête d'entraînement et de la deuxième extrémité du bras.

Le matériau hyper élastique utilisé pour la poutre peut par exemple comporter du nickel et du titane.

En variante, ce matériau peut comporter du cuivre, de l'aluminium et du béryllium.

Dans un mode de réalisation préféré, le dispositif d'essuyage est complété par une pièce longitudinale formant cache recouvrant l'ensemble comprenant ladite tête d'entraînement, ladite poutre et au moins une partie de la longueur dudit bras, ladite pièce étant par exemple surmoulée sur ledit ensemble.

L'invention sera mieux comprise au vu de la description suivante faite en référence aux figures annexées, dans lesquelles :

- La figure 1 illustre schématiquement les différents éléments d'un dispositif d'essuyage conforme à la présente invention ;
- La figure 2 illustre une courbe de traction d'un matériau hyper élastique particulièrement adapté à un dispositif d'essuyage selon l'invention;
- Les figures 3a et 3b sont des vues en perspective, respectivement assemblée et éclatée, d'un dispositif d'essuyage selon l'invention.

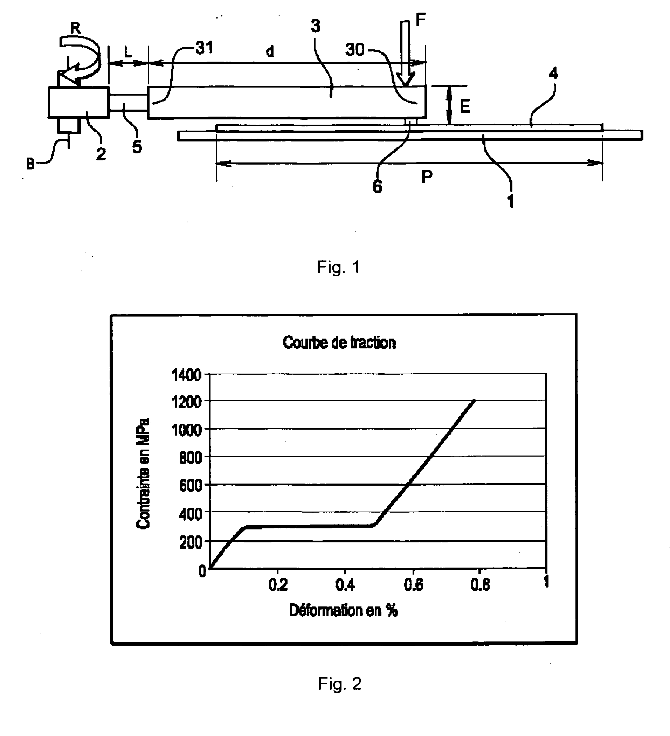

On a représenté schématiquement sur la figure 1 une surface vitrée 1 d'un véhicule automobile. Pour une meilleure compréhension, on considère dans la suite que cette surface vitrée 1 s'étend dans un plan horizontal. Cependant, dans la réalité, la surface vitrée, notamment dans le cas d'un pare-brise, est une surface galbée de manière convexe.

Le véhicule automobile est en outre équipé d'au moins un dispositif d'essuyage de la surface vitrée 1, composé classiquement d'une tête d'entraînement 2, d'un bras d'essuyage 3, et de moyens de rappel élastiques 5.

Lorsque le dispositif est en fonctionnement, la tête d'entraînement est entraînée en rotation alternée autour d'un axe B de balayage entre deux positions extrémales, à savoir une position correspondant à la position d'arrêt du dispositif, et une position haute. Le bras d'essuyage 3 est monté solidaire à rotation de la tête d'entraînement 2, et une première extrémité 30 portant un balai d'essuyage 4 grâce à un mécanisme de liaison articulé. La deuxième extrémité 31, opposée à la première extrémité, est quant à elle reliée à ladite tête d'entraînement 2 par l'intermédiaire des moyens élastiques 4 de rappel, ceux-ci étant aptes à générer une force de rappel permettant au bras d'exercer, au point de liaison avec le balai, une force d'appui suffisante en direction de la surface vitrée quelle que soit la position angulaire de la tête d'entraînement autour de l'axe de balayage.

Selon une caractéristique importante de l'invention, les moyens de rappel, qui sont, dans les dispositifs connus, réalisés au moyen d'un ressort hélicoïdal, comportent ici une poutre précontrainte en matériau hyper élastique s'étendant dans le prolongement du bras 3, ladite poutre étant apte à subir, entre les deux positions extrémales du dispositif d'essuyage lors d'un balayage, des déformations entre deux valeurs limites tout en générant une force de rappel sensiblement constante.

Le matériau hyper élastique est en conséquence choisi parmi les matériaux hyper élastiques dont la courbe de traction, représentative de la contrainte en fonction de la déformation, présente une plage de valeurs de déformation pour laquelle la contrainte est sensiblement constante. La figure 2 montre l'exemple d'un matériau hyper élastique pour lequel la courbe de traction possède une telle propriété. En effet, on note que la courbe présente un plateau correspondant à toute une plage de valeurs, dans laquelle la force restituée est constante, dans l'exemple de l'ordre de 300 MPascal.

Ainsi, la présente invention requiert, à partir du matériau choisi, de dimensionner la poutre, et de choisir correctement la précontrainte appliquée sur la poutre, de façon à ce que, lors du fonctionnement du dispositif d'essuyage, les déformations subies par cette poutre soient effectivement comprises dans cette plage de valeurs.

Pour l'exemple du matériau dont la courbe de traction est représentée sur la figure 2, la poutre sera de préférence dimensionnée et précontrainte de façon à subir, lors du balayage, des déformations comprises entre 0,1 % et 0,5%.

A titre d'exemple non limitatif, on pourra choisir un matériau hyper élastique comportant du nickel et du titane, ou bien un matériau hyper élastique comportant du cuivre, de l'aluminium et du béryllium.

On note que la force F qui doit être appliquée par le bras 3 sensiblement au centre du balai 4, au niveau de l'articulation, doit être au moins égale à la réaction du pare-brise sur les éléments du dispositif. Cette force est fonction de la longueur P du balai et de la force du balai sur le pare-brise 1 par unité de longueur.

Ainsi, pour un balai 4 de longueur P égale à 70 cm, exerçant une pression de 18 g/cm, la réaction R du pare-brise se calcule comme suit :

$$R = 0{,}018 \text{ Kg/cm} \times 70 \text{ cm} \times 9{,}81 \text{ N/Kg} = 12 \text{ N.}$$

En conséquence, la force F doit être au moins égale à 12 N pour garantir que la balai sera effectivement plaqué contre la vitre.

Des essais menés par la Demanderesse ont permis de démontrer que l'utilisation d'une poutre de forme parallélépipédique de longueur L égale à 10 cm, de largeur égale à 19,7 mm et de hauteur égale à 5,4 mm, précontrainte à 300 MPa permet d'obtenir une telle force F constante quel que soit l'angle de balayage. Les essais ont par ailleurs montré que la poutre résiste bien également à la torsion, et n'est pas influencée par d'autres phénomènes tels que l'angle de pompage dû au galbe de la surface vitrée. Bien entendu, ces valeurs ne sont données qu'à titre d'exemple.

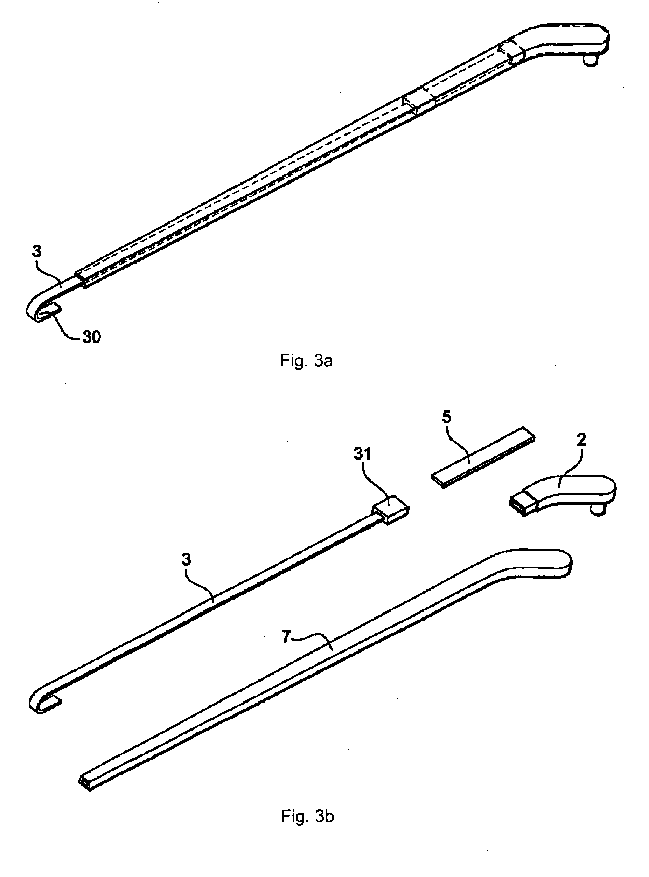

Elles démontrent cependant qu'une poutre de faible encombrement, notamment en hauteur et en largeur, peut remplacer le ressort hélicoïdal jusqu'ici utilisé, en offrant en outre une garantie quant à l'obtention d'une force d'appui constante. Il en résulte qu'il est possible, grâce à l'invention, de réaliser des dispositifs d'essuyage extrêmement plats, comme visible notamment sur l'exemple donné sur les figures 3a et 3b.

Sur ces figures 3a et 3b, chaque extrémité de la poutre est insérée pour maintien dans une fente correspondante respectivement de la tête d'entraînement 2 et de la deuxième extrémité 31 du bras 3. Les différents éléments étant dans le prolongement les uns des autres, il en résulte un encombrement optimisé en hauteur du dispositif d'essuyage. Dans l'exemple représenté, le dispositif d'essuyage comporte en outre une pièce 7 longitudinale formant cache, recouvrant un ensemble comprenant ladite tête d'entraînement 2, ladite poutre 4 et au moins une partie de la longueur dudit bras 3. Cette pièce 7, qui peut être réalisée avantageusement par surmoulage sur l'ensemble, remplace ainsi le capuchon et le carter utilisés dans les dispositifs classiques.

## Revendications

1. Dispositif d'essuyage pour surface vitrée (1) de véhicule automobile, comportant une tête d'entraînement (2) apte à être entraînée en rotation alternée autour d'un axe (B) de balayage, un bras d'essuyage (3) solidaire à rotation de la tête d'entraînement, ledit bras d'essuyage (3) comprenant une première extrémité (30) portant un balai d'essuyage (4), et une deuxième extrémité (31) reliée à ladite tête d'entraînement (2) par l'intermédiaire de moyens élastiques (5) de rappel aptes à générer une force de rappel permettant au bras d'exercer, sur le balai, une force d'appui suffisante en direction de la surface vitrée quelle que soit la position angulaire de la tête d'entraînement autour de l'axe de balayage, **caractérisé en ce que** lesdits moyens élastiques (5) de rappel comportent une poutre précontrainte en matériau hyper élastique s'étendant dans le prolongement dudit bras, ladite poutre étant apte à subir, entre deux positions extrémales du dispositif d'essuyage lors d'un balayage, des déformations entre deux valeurs limites tout en générant une force de rappel sensiblement constante.

2. Dispositif d'essuyage selon la revendication 1, **caractérisé en ce que** la poutre est dimensionnée et précontrainte de façon à subir, lors du balayage, des déformations comprises entre 0,1% et 0,5%.

3. Dispositif d'essuyage selon la revendication 2, **caractérisé en ce que** la poutre est de forme parallélépipédique dont chaque extrémité est insérée pour maintien dans une fente correspondante respectivement de la tête d'entraînement (2) et de la deuxième extrémité (31) du bras (3).

4. Dispositif d'essuyage selon l'une quelconque des revendications 2 ou 3, **caractérisé en ce que** le matériau hyper élastique comporte du nickel et du titane.

5. Dispositif d'essuyage selon l'une quelconque des revendications 2 ou 3, **caractérisé en ce que** le matériau hyper élastique comporte du cuivre, de l'aluminium et du béryllium.

6. Dispositif d'essuyage selon l'une quelconque des revendications précédentes, **caractérisé en ce qu'**il comporte en outre une pièce (7) longitudinale formant cache recouvrant un ensemble comprenant ladite tête d'entraînement (2), ladite poutre (5) et au moins une partie de la longueur dudit bras (3).

7. Dispositif d'essuyage selon la revendication 6, **caractérisé en ce que** ladite pièce (7) est surmoulée sur ledit ensemble.

## Claims

**1.** A wiping device for a glass surface (1) in a motor vehicle, including a drive head (2) capable of being driven in alternate rotation about a sweeping axis (B), a wiping arm (3) integral in rotation with the drive head, said wiping arm (3) including a first end (30) supporting a wiping blade (4), and a second end (31) connected with said drive head (2) through resilient return means (5) able to generate a return force enabling the arm to exert a sufficient bearing force onto the blade, toward the glass surface, whatever the angular position of the drive head about the sweeping axis, **characterized in that** said resilient return means (5) include a pre-stressed beam made of a hyper resilient material running on from said arm, with said beam being able to undergo, between two extreme positions of the wiping device during sweeping, deformations between two limit values, while generating a substantially constant return force.

**2.** A wiping device according to claim 1, **characterised in that** the beam is so dimensioned and pre-stressed as to undergo deformations between 0.1% and 0.5% during sweeping.

**3.** A wiping device according to claim 3, **characterised in that** the beam has a parallelepiped shape, each end of which is inserted, to be held, into a respectively matching slot of the drive head (2) and the second end (31) of the arm (3).

**4.** A wiping device according to any one of claims 2 or 3, **characterised in that** the hyper-resilient material includes nickel and titanium.

**5.** A wiping device according to any one of claims 2 or 3, **characterised in that** the hyper-resilient material includes copper, aluminum and beryllium.

**6.** A wiping device according to any one of the preceding claims, **characterised in that** it further includes a longitudinal part (7) forming a cover covering an assembly including said drive head (2), said beam (5) and at least a part of the length of said arm (3).

**7.** A wiping device according claim 6, **characterised in that** said part (7) is overmolded on said assembly.

## Patentansprüche

**1.** Vorrichtung zum Wischen der Glasfläche (1) eines Kraftfahrzeugs, die einen Antriebskopf (2) umfaßt, der geeignet ist, in abwechselnde Drehung um eine Wischachse (B) versetzt zu werden, einen fest verbundenen Wischarm (3) mit Drehung des Antriebskopfes, wobei der besagte Wischarm (3) ein erstes Ende (30) umfaßt, das einen Scheibenwischer (4) trägt, und ein zweites Ende (31), das mit dem besagten Antriebskopf (2) vermittels elastischer Rückholmittel (5) verbunden ist, die geeignet sind, eine Rückholkraft zu generieren, die dem Arm ermöglicht, auf das Wischerblatt eine ausreichende Auflagekraft in Richtung der Glasfläche bei jeder beliebigen Winkelposition des Antriebskopfes um die Wischachse auszuüben, **dadurch gekennzeichnet, daß** die besagten elastischen Rückholmittel (5) einen vorbelasteten Träger aus hochelastischem Material umfassen, der sich in der Verlängerung des besagten Arms erstreckt, wobei der besagte Träger geeignet ist, zwischen zwei Extrempositionen der Vorrichtung zum Wischen bei einem Wischvorgang Verformungen zwischen zwei Grenzwerten auszuhalten und gleichzeitig eine deutlich konstante Rückholkraft zu generieren.

**2.** Vorrichtung zum Wischen nach Anspruch 1, **dadurch gekennzeichnet, daß** der Träger so dimensioniert und vorbelastet ist, daß er beim Wischen Verformungen von zwischen 0,1 % und 0,5 % erleidet.

**3.** Vorrichtung zum Wischen nach Anspruch 2, **dadurch gekennzeichnet, daß** der Träger eine parallelflache Form hat, von der jedes Ende zur Haltung des Antriebskopfes (2) beziehungsweise des zweiten Endes (31) des Arms (3) in einen entsprechenden Schlitz eingesetzt ist.

**4.** Vorrichtung zum Wischen nach einem beliebigen der vorstehenden Ansprüche 2 oder 3, **dadurch gekennzeichnet, daß** das hochelastische Material Nickel und Titan enthält.

5. Vorrichtung zum Wischen nach einem beliebigen der vorstehenden Ansprüche 2 oder 3, **dadurch gekennzeichnet, daß** das hochelastische Material Kupfer, Aluminium und Beryllium enthält.

6. Vorrichtung zum Wischen nach einem beliebigen der vorstehenden Ansprüche, **dadurch gekennzeichnet, daß** sie außerdem ein längliches Teil (7) umfaßt, das eine Abdeckung bildet und eine Gruppe überdeckt, die den besagten Antriebskopf (2), den besagten Träger (5) und mindestens einen Teil der Länge des besagten Arms (3) umfaßt.

7. Vorrichtung zum Wischen nach Anspruch 6, **dadurch gekennzeichnet, daß** das besagte Teil (7) auf die besagte Gruppe gegossen ist.

Fig. 1

Fig. 2

3

30

Fig. 3a

5

2

31

3

7

Fig. 3b

**EP 2 055 540 B1**

## RÉFÉRENCES CITÉES DANS LA DESCRIPTION

**Documents brevets cités dans la description**

- FR 2890922

- WO 2006018453 A